# EUROPEAN PATENT APPLICATION

(11) **EP 4 847 417 A1**
(43) Date of publication of application: **02.12.2026**
(21) Application number: 25179804.7
(22) Date of filing: 30.05.2025
(51) Int. Cl.: B65G 1/04, B65G 1/137

(54) **WORKSTATION**

(71) Applicant: AutoStore Technology AS, 5578 Nedre Vats (NO)
(72) Inventor: Novák, Samuel Matyás, 5578 Nedre Vats (NO); Matre, Dag Arne, 5578 Nedre Vats (NO); Hörnlund, Staffan, 5578 Nedre Vats (NO)
(74) Representative: Kilburn & Strode LLP

(57) **Abstract**

The disclosure relates to an automated storage and retrieval system comprising a storage grid defined by a plurality of vertical columns defining a plurality of cells for storing bins. The plurality of cells comprises a first cell comprising a first high throughput port; a second cell comprising a low throughput port; and a third cell comprising a second high throughput port. The first and second high throughput ports are configured to process the same set of bins. The first and third cells are separated by the second cell or a fourth cell of the plurality of cells.

## Description

### TECHNICAL FIELD

The disclosure relates to an automated storage and retrieval system. More particularly, it relates to a port configuration for an automated storage and retrieval system and a method performed by the system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Ports provide an interface between the interior of the grid where containers are stored and the exterior of the grid where containers are accessed. A workstation comprises a plurality of ports that may be used together by an operator. Optimisation of the way the constituent ports are utilised can improve efficiency of the workstation.

One or more aspects of the invention of the present application are set out in the claims.

### BRIEF DESCRIPTION OF THE DRAWINGS

The disclosure will now be described in more detail in connection with a number of examples shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an exemplary port for an using an automated storage and retrieval system;
Fig. 6a shows a grid with a low throughput port between two linked high throughput ports;
Fig. 6b shows a grid with two low throughput ports between two linked high throughput ports;
Figs. 6c and 6d show a grid with two low throughput ports and two linked high throughput ports in an alcove in two different configurations;
Fig. 6e shows a grid with two linked high throughput ports and a conveyor belt;
Fig. 7 shows a bin queue;
Fig. 8 is a flow diagram for a method of using an automated storage and retrieval system;
Fig. 9 is a flow diagram for a method of processing a bin set; and
Fig. 10 is a flow diagram for a method of using an automated storage and retrieval system.

### DETAILED DESCRIPTION

In overview, the disclosure relates to an automated storage and retrieval system "ASRS" comprising a storage grid defined by a plurality of vertical columns defining a plurality of cells for storing bins. The plurality of cells comprises a first cell comprising a first high throughput port; a second cell comprising a low throughput port; and a third cell comprising a second high throughput port. The first and second high throughput ports are configured to process the same set of bins. The first and third cells are separated by the second cell or a fourth cell of the plurality of cells. This configuration minimises the distance between bins when transferring items between the high throughput ports and the low throughput port. Furthermore, speed of operation is further improved by the use of two high throughput ports to process a same set of bins since the high throughput ports limit the speed of a packing operation.

### Automated storage and retrieval system overview

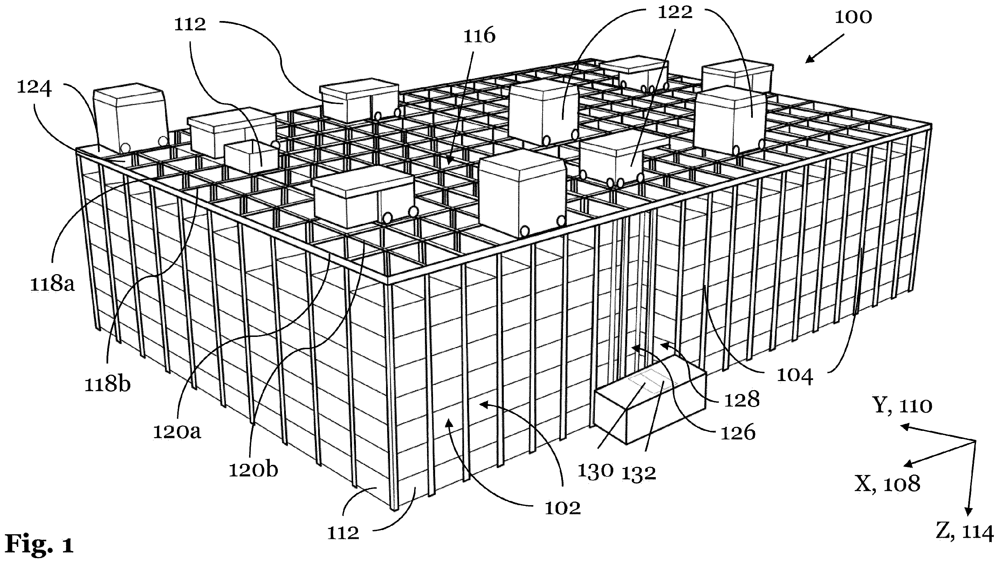

Referring to the example shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

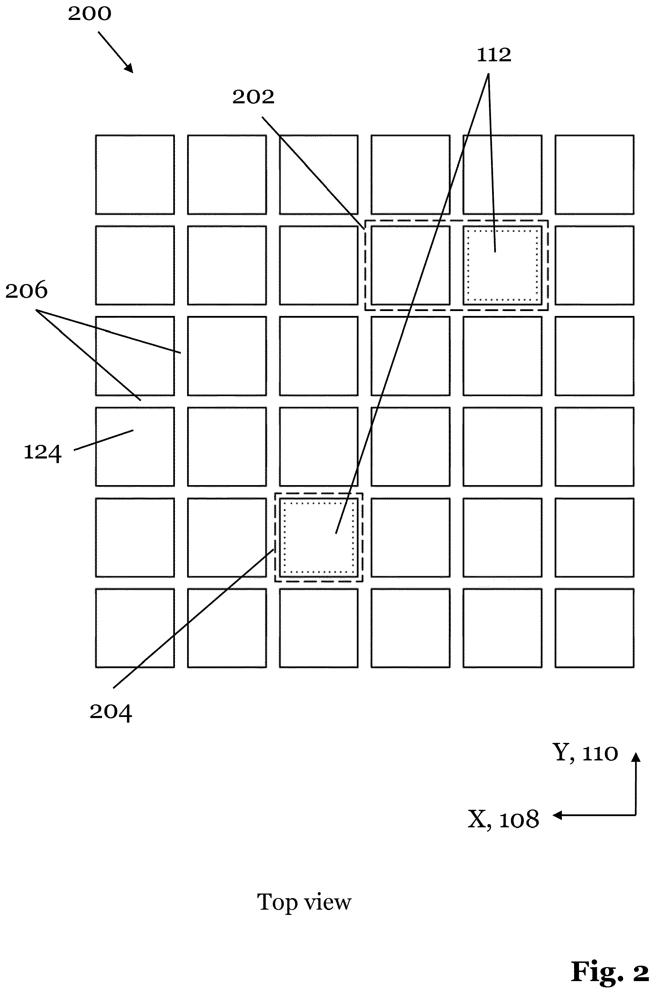

Referring to the example shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

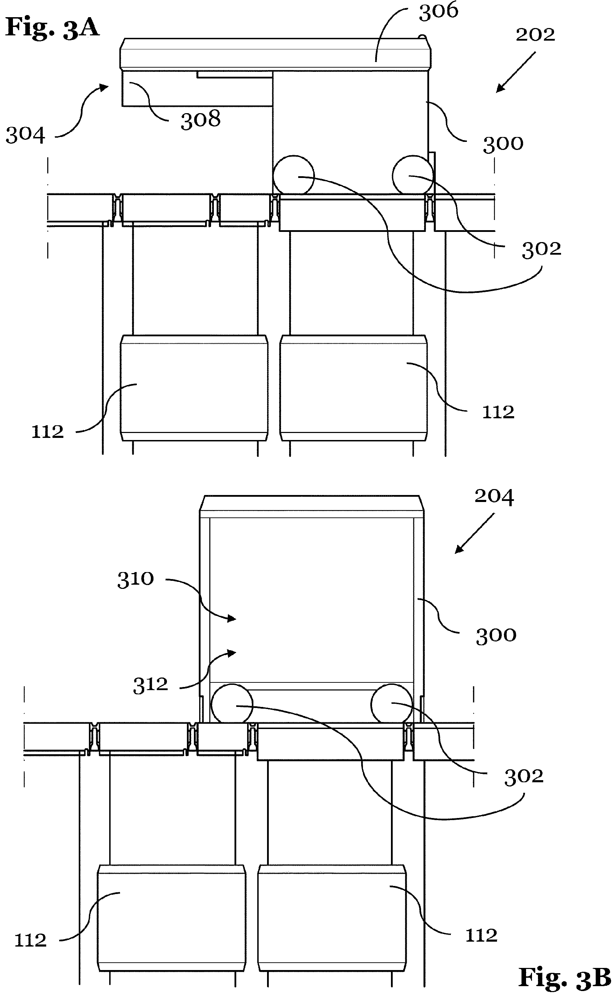

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

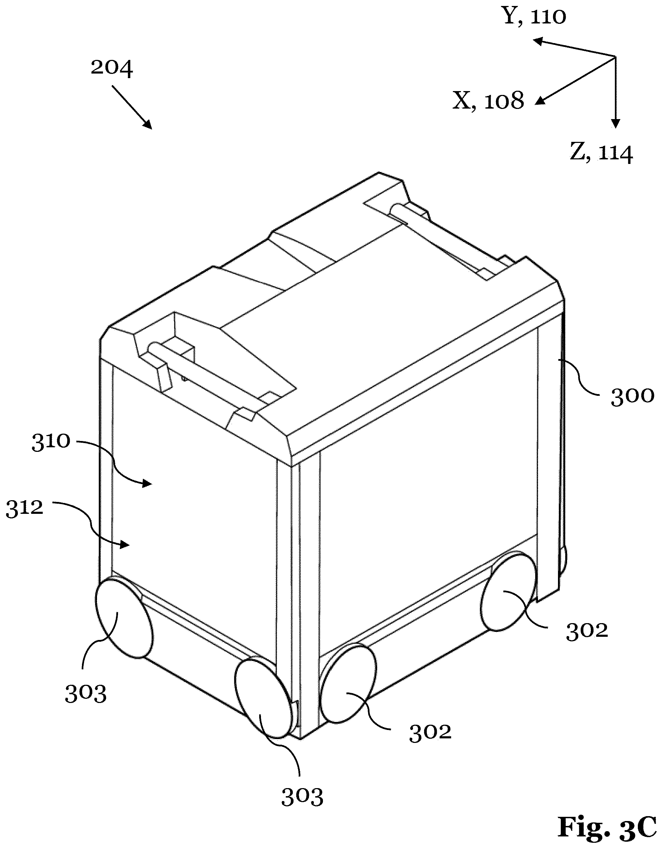

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

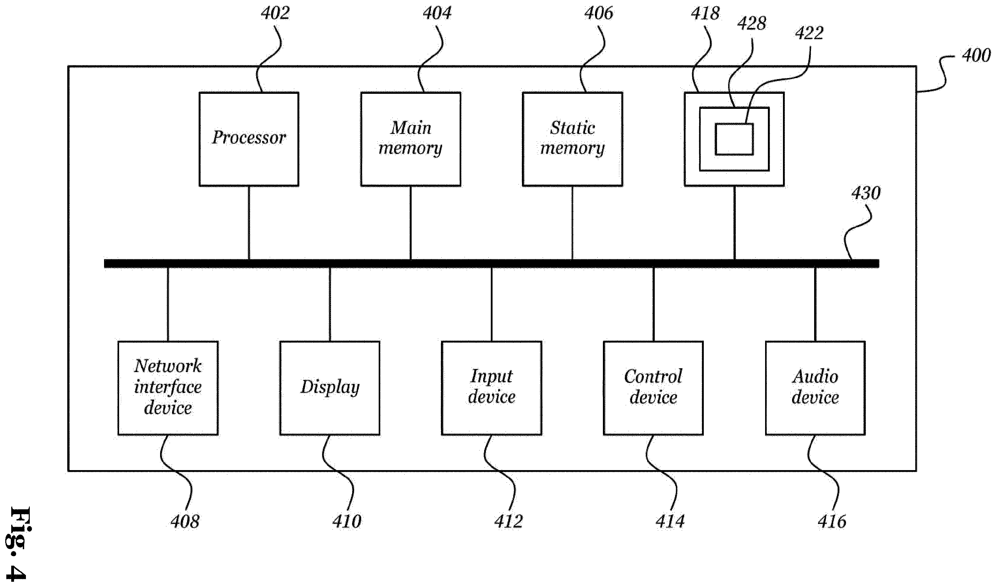

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

The specific improvements of the present disclosure will now be described in general terms before implementations of the disclosure are described by way of example with reference to the drawings. The word "may" is used to refer to a feature that is optional, i.e. in some implementations of the disclosure, the feature is present, and in some implementations of the disclosure, the feature is not present.

In a first aspect of the present disclosure, an automated storage and retrieval system "ASRS" comprises a storage grid defined by a plurality of vertical columns defining a plurality of cells for storing bins. The plurality of cells comprises a first cell comprising a first high throughput port; a second cell comprising a low throughput port and a third cell comprising a second high throughput port. The first and second high throughput ports may be configured to process the same set of bins. The first and third cells may be separated by the second cell or a fourth cell of the plurality of cells.

As explained above, robotic vehicles can lower a storage bin from the top of a port column down to the respective port, at which point the port can be operated to provide access to items stored in the bin. The high throughput ports process bins that undergo relatively few bin operations (e.g. relatively few item picking or placing actions) per bin relative to bins processed by the low throughput port. For example, the bins processed via the high throughput ports may have a low batching factor relative to bins processed via the low throughput port, as discussed in further detail below. In other terms, the turnover of bins in the high throughput ports may be higher than the in the low throughput ports.

In operation, a user (e.g. a human or a robotic arm) transfers items between bins in the ports. That is, the user may transfer a plurality of items from bins in the high throughput ports to a bin in the low throughput port, or the user may transfer a plurality of items from a bin in the low throughput port to bins in the high throughput ports. This configuration is particularly ergonomic and practical for the user since the distance between high and low throughput bins is minimised. Speed of operation is further increased by the use of two high throughput ports to process a same set of bins, as discussed in further detail below. For example, bins from the same set of bins may be presented in an alternating matter at the first high throughput port and the second high throughput port. A set of bins may also be known as a bin queue, however, it is important to note that the set or queue does not necessarily have an order in which the bins must be delivered, the order being decided by the ASRS to optimise speed of delivery using algorithms known to the skilled person. Yet further, the exact configuration of the ports is flexible, providing flexibility of installation in an ASRS.

In the context of the disclosure, "separated by the second cell or a fourth cell of the plurality of cells" may mean, for example, that a grid path traversable by a robotic vehicle from the first cell to the third cell comprises the second cell or the fourth cell. The path may be the shortest possible path between the first and third cells.

In examples, the first high throughput port and the second high throughput port are configured to be operated as a single logical port. A logical port may be operated as if it were one port according to commands sent to the logical port. Logical grouping of ports makes them operate in a linked way. That is, the two physical ports are grouped together to create a logical port, and the ASRS operates the physical ports as if they were one according to commands sent to the logical port. In this way, the ASRS can be used with an existing warehouse management system against the logical port. Software being run by the ASRS takes care of orchestrating the physical ports so that, for example, bins from a single queue or set are presented alternatively in the grouped physical ports. Additionally, using such a logical port instead of two physical ports with separate bin queues allows the ASRS to better optimize bin delivery.

In further detail, an ASRS typically works in conjunction with an warehouse management system. The warehouse management system tells the processing system of the ASRS which bins should be presented at which ports and the processing system takes care of optimising the order in which the bins are delivered. The warehouse management system may be proprietary and so it is not possible to readily modify the warehouse management system to implement new functionality. To fulfil an order more quickly, two ports can be used as if they were a single port processing the same queue of bins. A logical port is seen by a warehouse management system as a single port and treated a such. A processing system of the ASRS may orchestrate the physical ports so that bins are presented in an alternating matter in the first source port and the second source port. This is particularly advantageous since typically a warehouse management system tells the processing system which bins should be presented in which port and the warehouse management system itself is not capable of using two ports to deliver bins from a single bin queue. That is to say that the workstation can be readily integrated into a preexisting ASRS with proprietary warehouse management system and provide efficient staging (picking items from several source bins into one target bin)/order fulfilment.

The first and second high throughput ports and the low throughput port may be referred to as a port arrangement or workstation. A workstation may be a physical grouping of individual ports. Each port may have a safety system. The safety systems of the individual ports may be linked/the workstation may have a safety system controlling all of the ports of the workstation. With reference to error handling, for normal errors, button presses may be distributed across the workstation. The workstation may be configured such that a single button press will clear all errors and initialize all ports within the workstation.

When the ports have linked safety systems, there may be a compliance requirement that a safety error can be reset only by a physical button press in the port which caused the safety error. In that case, software which implements workstation logic may turn on a button backlight and accepts button presses only in ports which need a safety system reset. Only when the safety system is reset in the last port which needed a local button press will the software clear all errors and initialize all ports within the workstation. Additionally or alternatively, there may be a compliance requirement that a physical button press is needed after a port is power cycled. If multiple ports within the workstation were power cycled, the logic may be the same as for safety error handling, *mutatis mutandis.*

A port arrangement or workstation may have a human-machine interface "HMI" configured to control the workstation and the plurality of ports. The ports may share controls and/or buttons configured to operate the workstation and ports. Physically, the HMI/ controls/buttons may be connected to only one of the ports. Alternatively, each port may comprise a dedicated HMI. That is to say that the HMI/controls/buttons may indirectly operate the ports to which they are not directly connected, or the HMI/ controls/buttons on a port may be directly connected to one or more of the other ports as well.

Regarding the structure of a port, each of the plurality of ports of the ASRS of may be configured to occupy a single cell of the ASRS, or at least one of the plurality of ports may be configured to occupy a single cell of the ASRS. For example, one of the high throughput ports, the low throughput port, each of the high throughput ports or each of the plurality of ports may be configured to occupy a single cell of the ASRS.

In view of the above properties of the ports, they may be relatively inexpensive to produce and install, modular and safety compliant.

The first high throughput port and the second high throughput port may be configured to process a first bin set and the low throughput port may be configured to process a second bin set, wherein the first bin set is larger than the second bin set. Additionally or alternatively, the first bin set may have a first average batching factor and the second bin set may have a second average batching factor, the first average batching factor being less than the second average batching factor. Batching factor refers to the number of operations per bin before it is returned to the grid.

The ASRS may further comprise a processing system (as described above with reference to Fig. 4) configured to control the first high throughput port; the second high throughput port; and the low throughput port. The processing system may be configured to perform any of the methods disclosed below.

The low throughput port may be positioned between the first high throughput port and the second high throughput port. One of the high throughput ports may be directly adjacent to the low throughput port. Both of the high throughput ports may be directly adjacent to the low throughput port e.g. at opposite sides of the low throughput port. The plurality of cells may be three directly adjacent cells of the ASRS. The ASRS may comprise a plurality of low throughput ports, wherein the first and third cells are separated by cells comprising the plurality of low throughput ports. The plurality of low throughput ports may be adjacent to, directly adjacent to or physically connected to the first high throughput port and the second high throughput port.

In examples, the high throughput ports may be referred to as source ports and the low throughput port may be referred to as a target port. Example use cases for the ports are consolidating orders into individual bins and/or consolidating bins with the same items to free up bins in the ASRS. Transfer of items from bins in the first and second source ports to a bin in the target port may be performed manually or in an automated manner such as by a picking arm with machine vision. As noted above, the target port may have a lower throughput because of a high batching factor. The target port may also be known as a consolidation port.

In other examples, the source and target ports may be reversed. That is to say that the high throughput ports may be referred to as target ports and the low throughput port may be referred to as a source port. The preceding paragraph considers staging where items are picked from multiple source bins into one target bin. In this case, it makes sense in terms of robot exchange for the middle port to present target bins. This relationship can be inverted - picking can be done from a single source bin into multiple target bins. This makes sense for high-running items, for example if many grocery orders contain milk, or a small giveaway item is to be added to every order leaving the ASRS. In this case, the middle port will be the source port. Multiple picks will be done from the middle port into target ports on the side.

When there are multiple low throughput ports between the high throughput ports, this allows picking twice from a source bin if the same item should go to both target bins.

In examples, the storage grid may further comprise a first buffer cell laterally adjacent to the first cell in which a first robotic vehicle can wait when a second robotic vehicle occupies the first cell. That is, buffer cells are positions in the ASRS where robots with the next bin in a bin queue can wait. They allow a bin to be positioned next to or near a cell for a port so that when the port becomes available, there is a reduced delay in transporting the bin to the port. As would be understood by the skilled person, buffer cells are not inside columns of the grid but are at the top of a column. The term "adjacent to" may mean directly adjacent to. As would be understood by the skilled person, this means that the column underneath the buffer cell is adjacent to the column comprising the corresponding cell. The ASRS may further comprise the first robotic vehicle and the second robotic vehicle, which may be controlled by the processing system of the ASRS. The ASRS may further comprise a second buffer cell laterally adjacent to the third cell in which a third robotic vehicle can wait when a fourth robotic vehicle occupies the third cell. The ASRS may further comprise the third robotic vehicle and the fourth robotic vehicle, which may be controlled by the processing system of the ASRS.

As explained above, buffer cells increase the speed with which a corresponding port can process a bin set or queue. However, when a low throughput port is directly adjacent to two other ports, it cannot have an adjacent buffer cell since this would prevent a robot from moving away from the port cell when the buffer cell is occupied (and the adjacent ports are in use). Thus, the inventors have identified that operating the outer ports as high throughput ports enables increased processing speed since there is an overall improvement when high throughput cells are provided with buffer cells at the expense of low throughput cells.

In examples, the first high throughput port and the second high throughput port may be opposite each other. For example, the plurality of ports may be in an alcove of the ASRS, forming a picking tunnel. The picking tunnel may have a first row of cells comprising the first high throughput port and a second row of cells comprising the second high throughput port. The low throughput port can be in the first or second row of cells, or each row may comprise a low throughput port. A third row of cells between the first and second rows completes the alcove. The first and second rows may be parallel to each other. The third row of cells may be orthogonal to the first and second rows. The picking tunnel may have buffer cells as described above. This setup improves robot movements compared to three or four ports side by side, and the ergonomics are particularly suited to robotic picking. For example, a robotic arm with a 360° range of motion may be positioned in or above the alcove. Thus, the ASRS may further comprise a robotic arm configured to pick items from the first high throughput port, the second high throughput port and/or the low throughput port. The robotic arm may comprise a means for detecting a storage bin, such as a camera or LIDAR or other form of computer vision, and/or may comprise a picking means for picking up or moving a storage bin, such as a gripping means. The alcove may be closed off by a safety fence to prevent access to the arm in operation.

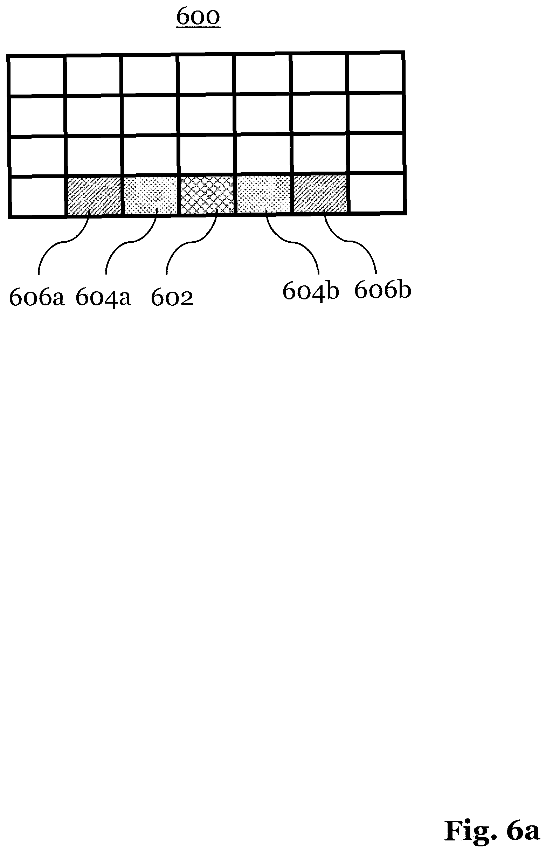

In the first aspect of the present disclosure, with reference to Fig. 6a, an exemplary ASRS 600 comprises a storage grid defined by a plurality of vertical columns defining a plurality of cells for storing bins. The plurality of cells comprises a first cell 604a comprising a first high throughput port; a second cell 602 comprising a low throughput port; and a third cell 604b comprising a second high throughput port. Each port occupies a single cell of the ASRS 600. The first and second high throughput ports are configured to process the same set of bins. The first and third cells 604a, 604b are separated by the second cell 602.

The storage grid further comprises a first buffer cell 606a laterally adjacent to the first cell 604a in which a first robotic vehicle is configured to wait when a second robotic vehicle occupies the first cell 604a. The ASRS further comprises a second buffer cell 606b laterally adjacent to the third cell 604b in which a third robotic vehicle is configured to wait when a fourth robotic vehicle occupies the third cell 604b.

The buffer cells 606a, 606b and first to third cells 602, 604a, 604b are directly adjacent to each other, with the second cell 602 between the first and third cells 604a, 604b and the first to third cells 602, 604a, 604b between the first and second buffer cells 606a, 606b. Furthermore, the first high throughput port and the second high throughput port are configured to be operated as a single logical port. This configuration is particularly advantageous since the high throughput ports benefit from the increased rate of turnover provided by the buffer cells, while the low throughput port does not require the buffer cells since it is not the rate determining factor in operation. As discussed above, the high throughput ports can be used as source ports, and the low throughput port as a target port, when there is a need to transfer multiple items into a single target port, for example when consolidating items in the grid in a single bin. Alternatively, the high throughput ports can be used as target ports, and the low throughput port as a source port, when there is a need distribute items from a single bin to multiple bins for fulfilment of multiple orders each comprising the same item.

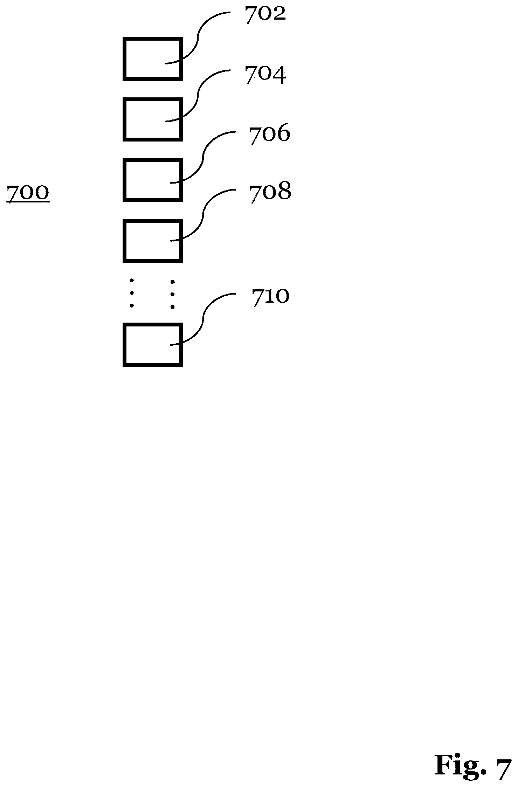

Fig. 7 depicts a bin queue 700 with first to fourth bins 702 to 708 and n^{th} bin 710. The ASRS determines the most efficient order in which to process the bins in the queue, reordering them as necessary until the entire queue has been delivered to a port. In operation, the linked high throughput ports operating as a single logical port process the same bin queue 700. For example, the first high throughput port receives the first bin 702 in the queue. Meanwhile, the second high throughput port receives the second bin 704 in the queue. Meanwhile, the third bin 706 is moved to the first buffer cell 606a. When the first bin 702 has been processed and removed from the first cell 604a by a robotic vehicle, the third bin 706 is already adjacent to the first cell 604a and can quickly be moved to the first cell 604a when it is free. Similarly, the fourth bin 708 is ready in the second buffer cell 606b. Once a buffer cell becomes free, the subsequent bin in the queue can be moved there. Thus, the linked high throughput ports process a bin queue 700 much more efficiently than a single port. The fact that there is no adjacent buffer port for the low throughput port is not an issue, since it is the processing of bins via the high throughput ports that is the rate determining step.

The ASRS further comprises a processing system 400 as described above with respect to Fig. 1 configured to control the first high throughput port; the second high throughput port; and the low throughput port. The processing system may be configured to perform any of the methods disclosed below.

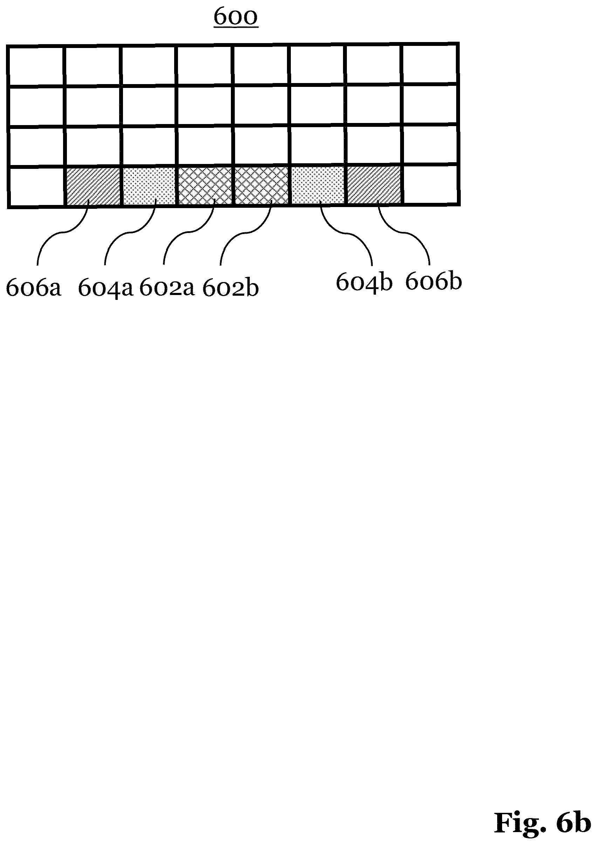

Another example of the ASRS 600 of the first aspect is shown in Fig. 6b. The ASRS 600 is the same as shown in Fig. 6a except that it comprises a fourth cell 602b directly between the second cell 602a and the third cell 604b. The fourth cell comprises a further low throughput port. When there are multiple low throughput ports between the high throughput ports, this allows picking twice from a source bin if the same item should go to both target bins.

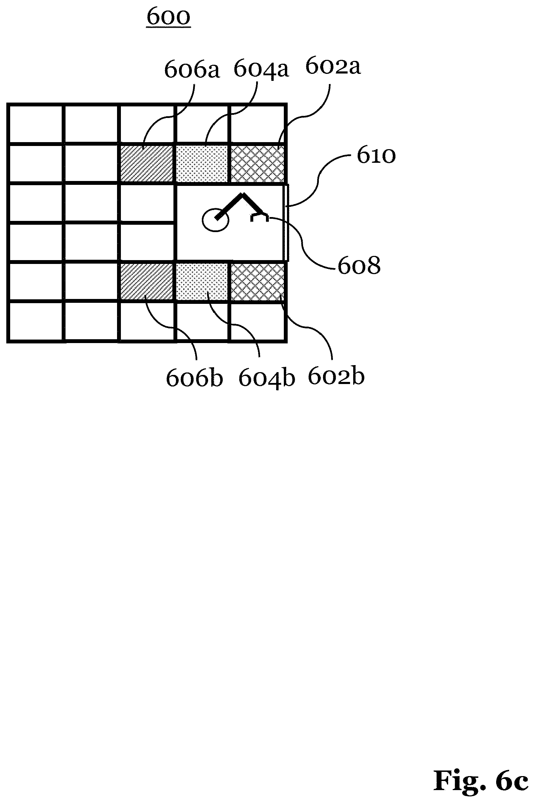

Another example of the ASRS 600 of the first aspect is shown in Fig. 6c. The first high throughput port in the first cell 604a and the second high throughput port in the third cell 604b are opposite each other in an alcove of the ASRS, forming a picking tunnel. The picking tunnel has a first row of cells comprising the first high throughput port and a second row of cells comprising the second high throughput port. Each row also comprises a low throughput port in a further cell 602a, 602b adjacent to the respective high throughput port. The first row also has a first buffer cell 606a. The second row of cells has a second buffer cell 606b. A third row of cells between the first and second rows (specifically between the first and second buffer cells 606a, 606b) completes the alcove. The first and second rows are parallel to each other and the third row of cells is orthogonal to the first and second rows. A robotic arm 608 is positioned in the alcove and configured to pick items from the first high throughput port and the second high throughput port and transfer them to the low throughput ports using computer vision and a gripping means. The alcove is closed off by a safety fence 610 to prevent access to the arm 608 in operation.

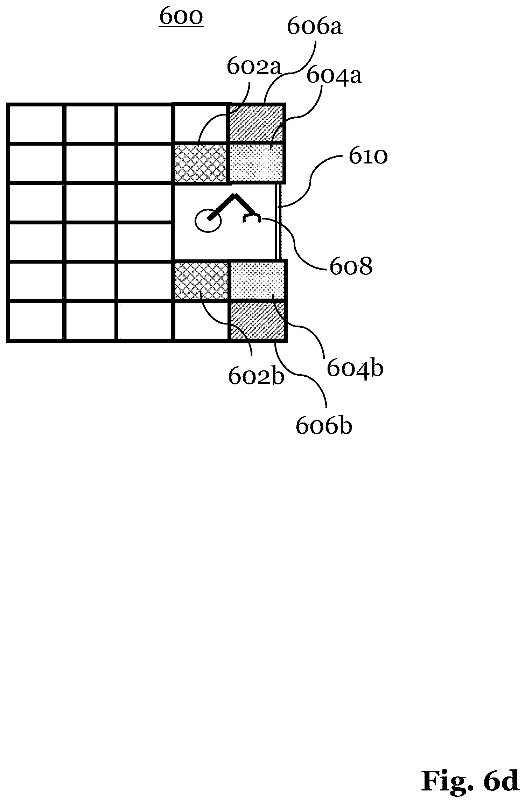

Fig. 6d is the same as Fig. 6c except that the positions of the adjacent high throughput and low throughput ports are inverted. That is to say that each low throughput port of the ASRS 600 shown in Fig. 6c has been reconfigured as a high throughput port (and linked to the other high throughput port to form a single logical port) and each high throughput port has been reconfigured as an (unlinked) low throughput port. This is an example of how the ports can be reconfigured on the fly by the processing system 400 to meet changing demands on the ASRS 600.

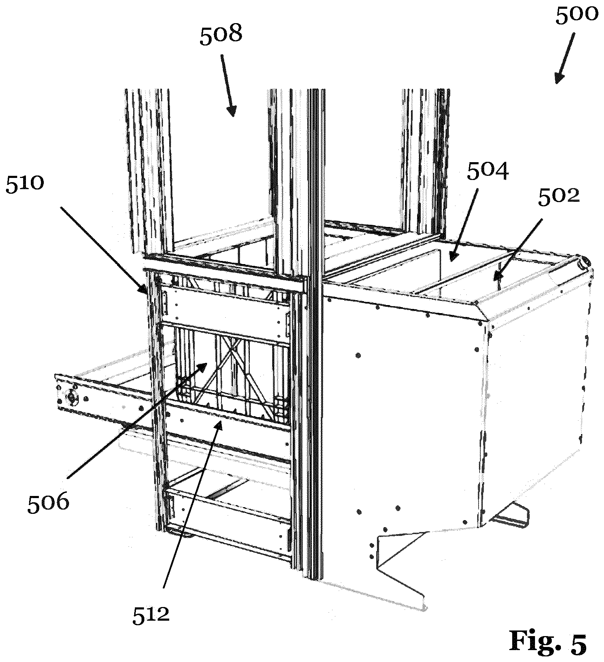

While suitable ports are known to the skilled person and also disclosed above, another such suitable port will now be described in detail with reference to Fig. 5. Example port 500 comprises an opening 502, a cover 504, a bin 506, a port column 508 and vertical frame members 510. The cover 504 is depicted as part way through uncovering the opening 902.

The port 500 comprises a conveyor module 512 and one or more drivers, motors or controllers configured to cause and control movement thereof. The conveyor module 512 also comprises position sensors. The position sensors are integrated into the conveyor module 512, but could instead be, for example, fixed to a frame of the port 500. For example, the position sensors may be fixed to a structure of the conveyor module supporting the conveyor/belt/driver thereof.

The port 500 comprises the conveyor module 512, a cover module (comprising the cover 504 and a driver thereof), and a frame on which the conveyor module 512 and the cover module are supported. The frame comprises guide blocks or guide profiles configured to interlock with correspondingly shaped features of the conveyor module 512 and/or the cover module, in order to provide a locating mechanism. Integrating the position sensors into the conveyor module 512 provides a more modular solution which enables easier removal, servicing, repair and/or replacement of particular components of the port 500 without requiring exchange or connection/reconnection of extraneous components of the port 500.

The conveyor 500 is configured to transport one or more containers 512 along its length. As such, the conveyor 500 is configured to transport containers 512 out of and/or into the storage grid.

In a second aspect of the present disclosure, a method uses an ASRS as described above. The method comprises transferring a first item between a first bin in the first cell and a second bin in the second cell and transferring a second item between a third bin in the third cell and the second bin in the second cell. The first and third bins are from the same bin set or queue. Only a single operation for each of the first and second high throughput ports is performed comparted to two operations for the low throughput port. The method may further comprise replacing the first bin in the first cell with a fourth bin and transferring a third item between the fourth bin and the second bin. The method may further comprise removing the second bin from the second cell, either before or after replacing the first bin. The fourth bin may be from the same bin set or queue as the first bin. The transporting and lowering of bins may be performed by robotic vehicles.

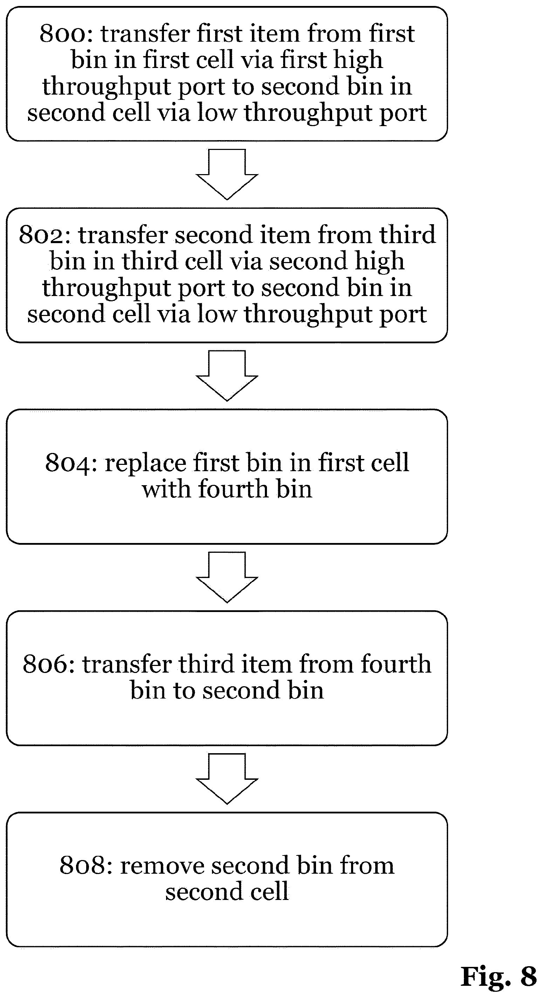

According to the second aspect of the present disclosure, with reference to Fig. 8, an exemplary method uses the ASRS shown in Fig. 6a. The method comprises transferring 800 a first item from a first bin in the first cell 604a via the first high throughput port to a second bin in the second cell 602 via the low throughput port and transferring 802 a second item from a third bin in the third cell 604b via the second high throughput port to the second bin in the second cell 602 via the low throughput port. The method further comprises replacing 804 the first bin in the first cell 604a with a fourth bin; transferring 806 a third item from the fourth bin to the second bin; and removing 808 the second bin from the second cell, wherein the first, third and fourth bins are from the same bin set.

In a third aspect of the present disclosure, a method of processing a bin set uses an ASRS comprising a buffer cell as described above. The method comprises transporting a first bin of the bin set to the first cell; transporting a second bin of the bin set to the third cell and transporting a third bin of the bin set to the first buffer cell while the first bin is in the first cell. The method may further comprise transporting a fourth bin of the bin set to the second buffer cell while the second bin is in the third cell. The method may further comprise removing the first bin from the first cell and replacing it with the third bin. The transporting and lowering of bins may be performed by robotic vehicles.

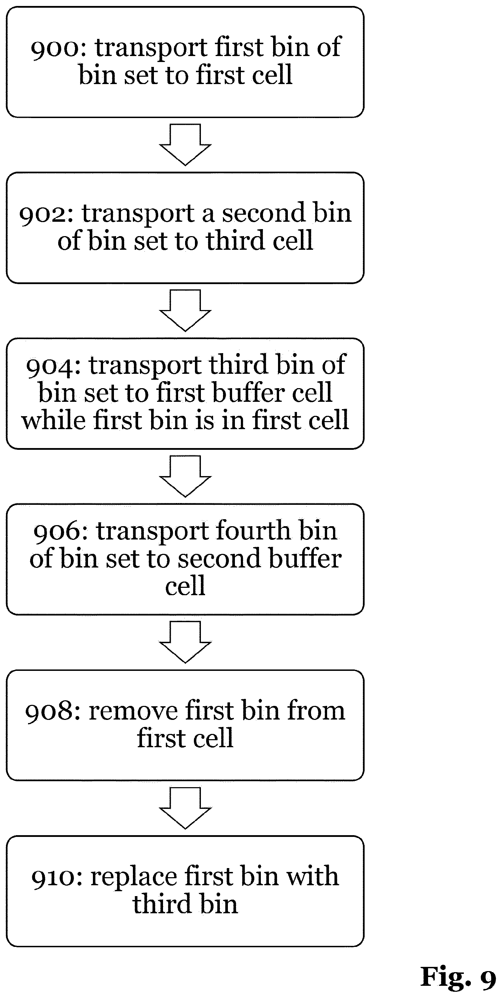

According to the third aspect of the present disclosure, with reference to Fig. 9, an exemplary method of processing a bin set uses the ASRS shown in Fig. 6a. The method comprises transporting 900 a first bin of the bin set to the first cell 604a; transporting 902 a second bin of the bin set to the third cell 604b; and transporting 904 a third bin of the bin set to the first buffer cell 606a while the first bin is in the first cell 604a. The method further comprises transporting 906 a fourth bin of the bin set to the second buffer cell 606b. The method then comprises removing 908 the first bin from the first cell 604a and replacing 910 it with the third bin.

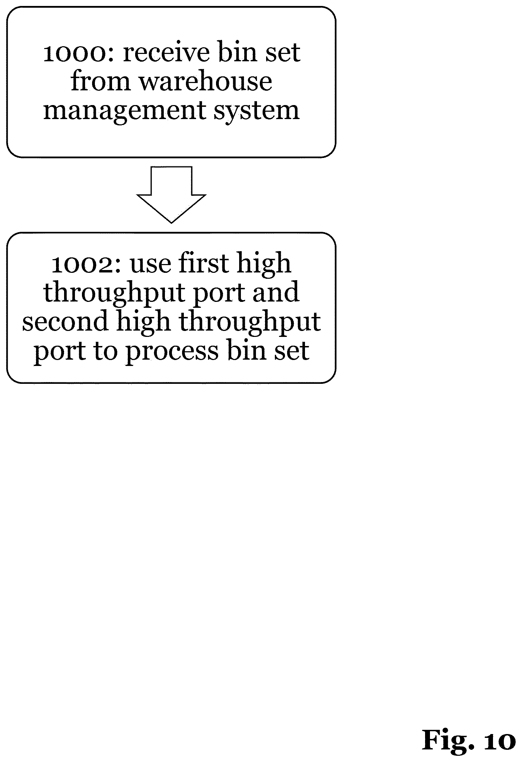

In the fourth aspect of the present disclosure, with reference to Fig. 10, an exemplary method uses the ASRS shown in Fig. 6a. The method comprises receiving 1000 a bin set from a warehouse management system and using 1002 the first high throughput port and the second high throughput port to process the bin set.

The above-disclosed methods may be performed by the processing system of the ASRS.

In a fifth aspect of the present disclosure, an ASRS comprises a storage grid defined by a plurality of vertical columns defining a plurality of cells. The plurality of cells comprises: a first cell comprising a first high throughput port; a second cell comprising a second high throughput port. The ASRS further comprises a shuttle for receiving items from the first high throughput port and the second high throughput port. The first and second high throughput ports may be configured to process the same set of bins.

The shuttle is a means of transporting items to and from the ASRS. For example, it may be a drone port at which a case of items can be collected or dropped off. Alternatively, it may be a conveyor belt configured to transports a case of items or individual items. Alternatively, it may be a robotic vehicle configured to move on the ground such as the floor of a warehouse. As such, the shuttle is analogous to the low throughput port of the preceding discussion, and the system operates in much the say way, *mutatis mutandis.* The above-described elements of the ASRS of the first aspect are therefore also compatible with and applicable to the ASRS of the first aspect.

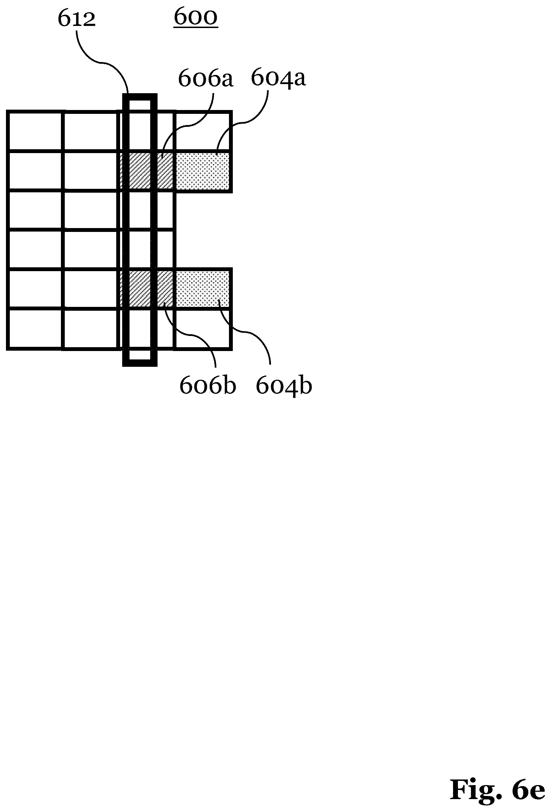

According to the fifth aspect of the present disclosure, with reference to Fig. 6e, an exemplary ASRS 600 comprises a storage grid defined by a plurality of vertical columns defining a plurality of cells. The plurality of cells comprises: a first cell 604a comprising a first high throughput port; a second cell 604b comprising a second high throughput port. The ASRS 600 further comprises a conveyor belt 612 for receiving items from the first high throughput port and the second high throughput port. The conveyor belt 612 is positioned underneath the grid. In Fig. 6e the first and second cells 604a, 604b are opposite each other, however, this is not necessary. For example, the first and second cells 604a, 604b may be directly adjacent to each other. The first and second high throughput ports are configured to process the same set of bins and each is adjacent to a buffer cell 606a, 606b.

In a sixth aspect of the present disclosure, a method uses the above-disclosed ASRS with shuttle. The method comprises transferring a first item between a first bin in the first cell and the shuttle; and transferring a second item between a second bin in the second cell and the shuttle. Thus, only a single operation for each of the first and second high throughput ports is performed comparted to two operations for the low throughput shuttle. The method may further comprise replacing the first bin in the first cell with a third bin; transferring a third item between the third bin and the shuttle; and removing the second bin from the second cell. The transporting and lowering of bins may be performed by robotic vehicles.

In a seventh aspect of the present disclosure, a method of processing a bin set uses the above-disclosed ASRS with shuttle. The method comprises transporting a first bin of the bin set to the first cell; transporting a second bin of the bin set to the second cell; and transporting a third bin of the bin set to the buffer cell while the first bin is in the first cell. The transporting and lowering of bins may be performed by robotic vehicles.

In an eighth aspect of the present disclosure, a method uses the above-disclosed ASRS with shuttle. The method comprises receiving a bin set from a warehouse management system and using the first high throughput port and the second high throughput port to process the bin set.

The methods of the sixth to eighth aspects are analogous to the second to fourth aspects, with the shuttle replacing the function of the low throughput cell, *mutatis mutandis.*

In a ninth aspect of the present disclosure, a computer-readable medium comprises instructions which, when executed by a processing system of an automated storage and retrieval system, cause the automated storage and retrieval system to perform any of the above-disclosed methods.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system "ASRS" comprising:
a storage grid defined by a plurality of vertical columns defining a plurality of cells for storing bins,
wherein the plurality of cells comprises:
a first cell comprising a first high throughput port;
a second cell comprising a low throughput port; and
a third cell comprising a second high throughput port,
wherein the first and second high throughput ports are configured to process the same set of bins, and
wherein the first and third cells are separated by the second cell or a fourth cell of the plurality of cells.

2. An ASRS according to claim 1, wherein the first high throughput port and the second high throughput port are configured to be operated as a single logical port.

3. An ASRS according to claim 1 or 2, wherein the first high throughput port and the second high throughput port are configured to process a first bin set and the low throughput port is configured to process a second bin set, wherein the first bin set is larger than the second bin set, and/or
wherein the first bin set has a first average batching factor and the second bin set has a second average batching factor, the first average batching factor being less than the second average batching factor.

4. An ASRS according to any preceding claim, further comprising a processing system configured to control:
the first high throughput port;
the second high throughput port; and
the low throughput port.

5. An ASRS according to any preceding claim, wherein the low throughput port is positioned between the first high throughput port and the second high throughput port.

6. An ASRS according to any preceding claim, wherein the storage grid further comprises a first buffer cell laterally adjacent to the first cell in which a first robotic vehicle can wait when a second robotic vehicle occupies the first cell.

7. The ASRS according to claim 6, further comprising a second buffer cell laterally adjacent to the third cell in which a third robotic vehicle can wait when a fourth robotic vehicle occupies the third cell.

8. An ASRS according to claim 6 or 7, wherein the processing system is configured to control:
the first robotic vehicle; and
the second robotic vehicle.

9. An ASRS according to any preceding claim, wherein the first high throughput port and the second high throughput port are opposite each other.

10. An ASRS according to any preceding claim, further comprising a robotic arm configured to pick items from the first high throughput port, the second high throughput port and/or the low throughput port.

11. A method of using an ASRS according any preceding claim, the method comprising:
transferring a first item between a first bin in the first cell and a second bin in the second cell; and
transferring a second item between a third bin in the third cell and the second bin in the second cell.

12. A method of processing a bin set using an ASRS according to claim 6 or any other claim when dependent on claim 6, the method comprising:
transporting a first bin of the bin set to the first cell;
transporting a second bin of the bin set to the third cell; and
transporting a third bin of the bin set to the first buffer cell while the first bin is in the first cell.

13. A method of using an ASRS according any of claims 1 to 10, the method comprising:
receiving a bin set from a warehouse management system; and
using the first high throughput port and the second high throughput port to process the bin set.

14. A computer-readable medium comprising instructions which, when executed by a processing system of an automated storage and retrieval system, cause the automated storage and retrieval system to perform the method of any of claims 11 to 14.

15. An automated storage and retrieval system "ASRS" comprising:
a storage grid defined by a plurality of vertical columns defining a plurality of cells, wherein the plurality of cells comprises:
a first cell comprising a first high throughput port; and
a second cell comprising a second high throughput port; and
a shuttle for receiving items from the first high throughput port and the second high throughput port,
wherein the first and second high throughput ports are configured to process the same set of bins.
